Europäisches Patentamt

European Patent Office

Office européen des brevets

(19)

(11) **EP 0 856 348 A2**

(12) **EUROPÄISCHE PATENTANMELDUNG**

(43) Veröffentlichungstag:
05.08.1998  Patentblatt 1998/32

(51) Int. Cl.⁶: **B01D 53/053**

(21) Anmeldenummer: 98101031.7

(22) Anmeldetag: 22.01.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 03.02.1997 DE 19703907

(71) Anmelder: BAYER AG
51368 Leverkusen (DE)

(72) Erfinder:
• Reiss, Gerhard
  51375 Leverkusen (DE)
• Hees, Bruno
  40764 Langenfeld (DE)
• Wolter, Robert
  50679 Köln (DE)

(54)  **Verfahren zur Trennung von Gasgemischen durch Druckwechseladsorption in einem Zweibett-Adsorber-System**

(57)  Die vorliegende Erfindung betrifft ein verbessertes und vereinfachtes sowie energetisch günstiges Verfahren zur adsorptiven Trennung von Gasgemischen, insbesondere von Luft, mittels anorganischer Adsorptionsmittel, insbesondere mittels Molekularsiebzeolithen, durch Druckwechseladsorption in einem Zweibett-Adsorber-System.

**Beschreibung**

Die vorliegende Erfindung betrifft ein verbessertes und vereinfachtes sowie energetisch günstiges Verfahren zur adsorptiven Trennung von Gasgemischen, insbesondere von Luft, mittels anorganischer Adsorptionsmittel, insbesondere mittels Molekularsiebzeolithen, durch Druckwechseladsorption in einem Zweibett-Adsorber-System.

Die adsorptive Trennung von Gasgemischen mit Hilfe der Druckwechseladsorption ist seit über 20 Jahren bekannt, wobei vielfältige technische Trennprozesse entwickelt worden sind. Alle Verfahren beruhen aber darauf, daß der Gasanteil des Gasgemisches (Rohgas), der die höhere Affinität zum Adsorptionsmittel aufweist, in einem sogenannten Adsorptionsschritt an der Oberfläche des Adsorptionsmittels in einem Adsorber festgehalten wird und die weniger stark adsorbierte Komponente aus dem mit Adsorptionsmittel gefüllten Adsorber abgezogen werden kann. Die Desorption der adsorbierten Phase erreicht man dann durch Druckabsenkung nach dem Adsorptionsschritt und gegebenenfalls zusätzlich mit Spülung des Adsorptionsmittels mit einem Teil des weniger stark adsorbierten Gases. Wird der Druck auf etwa Umgebungsdruck oder geringfügig darüber abgesenkt, spricht man von PSA-Systemen (Pressure-Swing-Adsorption). Im Falle der Druckabsenkung auf einen Druck unter Umgebungsdruck mittels einer Vakuumpumpe spricht man von VSA-Systemen (Vacuum-Swing-Adsorption). Auch hierbei wird das Adsorptionsmittel gegegebenfalls mit einem Teil des weniger stark adsorbierten Gases gespült. Es gibt aber auch Fälle, in denen auf eine Spülung verzichtet wird, insbesondere z.B. bei der Sauerstoffanreicherung von Luft mit Molekularsieb-Zeolithen. Die Verfahren mit Überdruckadsorption und Vakuumdesorption bezeichnet man als PVSA (Pressure-Vakuum-Swing-Adsorption).

In den nachfolgenden Ausführungen verstehen sich die Angaben in "bar" als Überdruck zum Umgebungsdruck, die Evakuierungsdrücke "mbar" als Absolutwerte.

Erfolgt die Adsorption bei etwa Umgebungsdruck, d.h. bei z.B. -0,05 bis 0,1 bar, und die Desorption bei Unterdruck von z.B. 100 bis 400 mbar (abs), dann spricht man von einem VSA-Prozeß. Nach dem Desorptionsschritt erfolgt stets die Befüllung des Adsorptionsmittels mit Gas auf den Druck des Adsorptionsschrittes, in den Fällen der PSA-Adsorption mit dem weniger stark adsorbierten Gasanteil oder Rohgas oder beiden gleichzeitig. Im Falle der VSA-Technik erfolgt die Befüllung mit dem weniger stark adsorbierten Gasanteil.

Die oben genannten Trennprozesse sind deshalb in drei Schritte gegliedert: Adsorption (Trennung), Desorption (mit Druckabsenkung) und Wiederbefüllung (mit Druckaufbau), weshalb zu einem vollständig kontinuierlich arbeitenden PSA- oder VSA-Prozeß drei Adsorber notwendig sind.

Zur Reduzierung der Investitionskosten sind seit geraumer Zeit auch VSA-Systeme mit 2 Adsorbern und einem Produktpuffer gebräuchlich. Da der Adsorptionsprozeß auch hier aus 3 Stufen besteht, Adsorption, Evakuieren, Füllen auf Adsorptionsdruck, aber nur zwei Adsorber zur Verfügung stehen, gehen einige Stufen fließend ineinander über oder werden sehr kurz gehalten. Die Adsorption erfolgt meist bei 0,1 bis 1 bar, wobei bereits beim Druckaufbau über Umgebungsdruck mit Luft das gewünschte Produkt produziert wird.

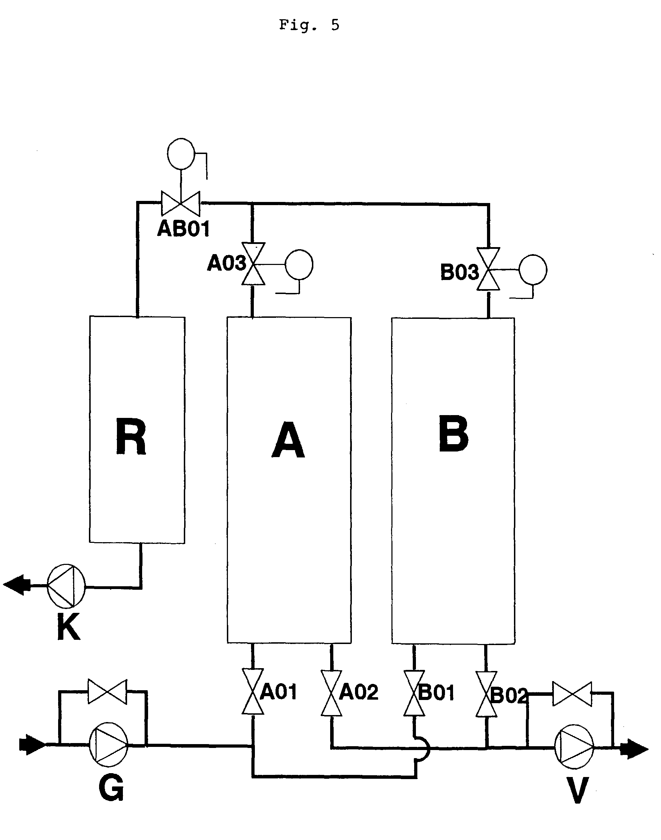

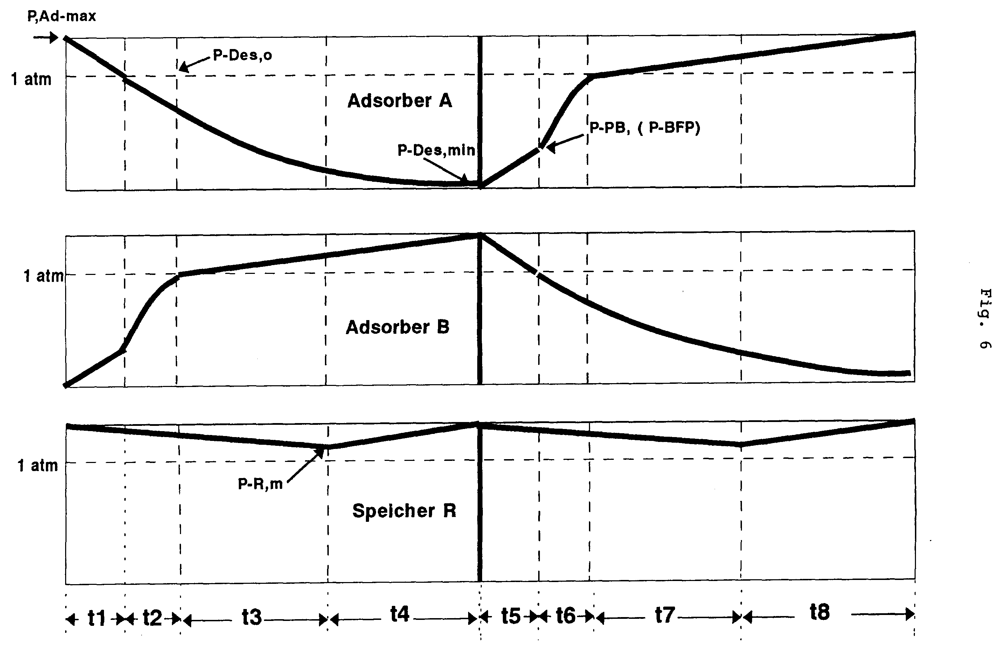

Der zeitliche Verfahrensablauf von Zweibett-Adsorbern bei einem PVSA-Prozeß zur $O_2$-Anreicherung von Luft ist häufig (siehe auch Fig. 5 und Fig. 6) folgender:

a) Ende der Adsorption in Adsorber A bei z.B. 0,4 bar (Druck $=P_{Ad\text{-}max}$) Überdruck

b) Umfüllschritt (sog. BFP-Schritt; Zeit $t_1$) von Adsorber A in den zweiten Adsorber B herunter auf etwa Umgebungsdruck oder etwas tiefer, z.B. auf 700 mbar (Druck $=P_{Des,o}$), wobei Adsorber B gleichzeitig evakuiert wird, und der Druck in B von seinem niedrigsten Druck (Druck $=P_{Des,min}$), auf einen höheren Druck ansteigt, z.B. von 200 auf 400 mbar (Druck $=P_{BFP}$)

c) Evakuieren von Adsorber A (Zeit $t_2$, $t_3$ und $t_4$; $N_2$-Desorption mit oder ohne Spülgas mittels Vakuumpumpe "V" auf 600 bis 200 mbar (abs) (Druck $=P_{Des,\,min}$)

d) Umfüllschritt (siehe unter b), dadurch Druckerhöhung in Adsorber A von z.B. 200 auf 400 mbar (Zeit $t_5$);

e) Restfüllschritt auf etwa Umgebungsdruck in Adsorber A und auf Adsorptionsdruck mit Luft über Gebläse "G", gegebenenfalls zusätzlich unter Umgehung von "G", teilweise in der ersten Füllzeit auch mit $O_2$-Produkt aus dem Puffer "R" (Zeit $t_6$); Produktgas wird aus dem Speicher "R" mit Kompressor "K" laufend abgezogen.

Da die $O_2$-Ausbeute, d.h. das Verhältnis zwischen $O_2$-Menge im Produktgas zu $O_2$-Menge der eingesetzten Luft, die aufzubringende Energie des Luftgebläses und der Vakuumpumpe direkt beeinflußt, hat man versucht, durch geeignete Maßnahmen den Prozeß vor dem Evakuieren so zu beenden, daß die $O_2$-Konzentration in der Adsorptionsaustrittszone nahezu gleich der $O_2$-Konzentration in der Eintrittszone ist. Dies ist der Fall bei Verfahren, in denen Gas der Austrittszone in die Eintrittszone zurückgeführt wird.

In GB-A 1 559 325 (insbesondere Fig. 7 und 8; 3 Adsorber-Adsorptionsverfahren) wird am Ende der Adsorption, z.B. von Adsorber A das gegenüber dem $O_2$-Produktgas $O_2$-arme Gas bei Adsorptionsdruck in den bereits aufgefüllten Adsorber B bei Adsorptionsdruck in die Eintrittszone zurückgeführt und das Produktgas aus der Austrittszone des Adsorbers B abgezogen. Die Zeit für die Rückführung ist verhältnismäßig lang, da die $O_2$-Produktrate die Rückführmenge und die Zeit bestimmt. Dieses Verfahren hat den entscheidenden Nachteil, daß die Zeit der Produktrückführung entweder die Zeit zum Bespannen der Adsorber oder die Abpumpzeit reduziert. Außerdem wird trockenes Gas durch die der Zeolithschüttung vorgeschaltete Trocknungszone geleitet, wodurch Feuchtigkeit in die $N_2$-$O_2$-Trennzone der Zeolithschüttung gerät.

In GB-A 2 154 465 (insbesondere Fig. 3) wird in einem 3-Adsorbersystem am Ende der Adsorption z.B. von Adsorber A ein Druckausgleich über die Austrittszone des Adsorbers A in die Eintrittszone des evakuierten Adsorbers B durchgeführt, wobei der Druck in Adsorber A absinkt und in Adsorber B zunimmt. Das gleiche Verfahren wird in DE-A 3 030 081 (insbesondere Fig. 1 und Spalte 4, Zeilen 18-47) beschrieben. Nachteil dieses Verfahens ist, daß die Umfüllmenge durch die mögliche Druckdifferenz der Entspannung vorgegeben und begrenzt ist, d.h. bei einer Adsorption mit Umgebungsdruck entfällt.

In EP-A 0 334 495 wird ebenfalls ein Druckausgleichsystem in einem 2-Adsorbersystem beschrieben. Am Anfang des Evakuierens wird z.B. von Adsorber A in Abwärtsströmung evakuiert, gleichzeitig am Austrittsende von Adsorber A in Aufwärtsströmung $O_2$-armes Gas abgezogen und in den bereits evakuierten Adsorber B in dessen Eintrittszone in Aufwärtsströmung eingefüllt. Die Rückführgasmenge ist auch hier begrenzt und zwar innerhalb der Druckdifferenz beim Abpumpen, was von Nachteil ist.

Die oben beschriebenen und bekannten Verfahren haben den Nachteil, daß das sogenannte "Austrittsgas" trocken ist und beim Rückführen durch die Trocknungszone geleitet wird und daß dadurch die Wasserfront in die Zeolithzone verschoben wird. Außerdem ist die Gasmenge bei der Rückführung durch die vorgegebenen Druckdifferenzen der Gleichstromentspannung begrenzt oder die Rückführzeit durch die vorgegebenen Parameter, wie z.B. Produktmenge, zu lang. Dadurch kann im Falle der $O_2$-Anreicherung von Luft nicht die gesamte mögliche Menge des $O_2$-armen Gases (21 bis 90 %ig) zurückgeführt werden.

Aufgabe war es daher, ein verbessertes Verfahren zur Trennung von Gasgemischen, insbesondere Luft, durch Druckwechseladsorption in einem Zweibett-Adsorbersystem zur Verfügung zu stellen, das es gestattet, die adsorptive Trennung einfach und energetisch günstig durchzuführen, das Durchleiten von trokkenem Gas durch die sogenannte feuchte Trocknungszone zu vermeiden und die Nachteile der Rückführung des $O_2$-armen Produktgases (Restproduktgas), wie Zeitverlust oder Begrenzung der Menge des rückgeführten Gases zu vermeiden.

Die Aufgabe konnte mit dem erfindungsgemäßen Verfahren gelöst werden.

Gegenstand der Erfindung ist ein Verfahren zur Trennung von Luft durch Adsorption mit Molekularsieb-Zeolithen in einem Zweibett-Adsorbersystem mit Produktpuffer zur Aufrechterhaltung eines kontinuierlichen, konstanten Sauerstoffproduktstromes, wobei die zwei Adsorberbetten mit Molekularsieb-Zeolithen in einer einheitlichen oder in mehreren unterschiedlichen Schüttungen verschiedener Zeolithtypen vorliegen und sich gegebenenfalls eine Schicht eines für Wasser selektiven Adsorptionsmittels vor den Schüttungen befindet, bei dem bei etwa Umgebungsdruck oder bis zu einem Überdruck von 0,5 bar während der Adsorption Luft durch den ersten Adsorber A geleitet wird und Stickstoff am Molekularsieb-Zeolithen bevorzugt gegenüber Sauerstoff adsorbiert wird, wobei sauerstoffreiches Produktgas mit einer $O_2$-Konzentrationen von 60 bis 96 Vol.-% am Austrittsende des Adsorbers A erhalten wird, nach der Adsorption die Desorption des Stickstoffes und gegebenenfalls der Feuchtigkeit durch Evakuieren im Gegenstrom zur Adsorption bei einem untersten Druck von 100 mbar bis 600 mbar (absolut) durchgeführt wird, dadurch gekennzeichnet, daß

a) nach der Adsorption in Adsorber A, dessen Druck von seinem Endwert nach dem Adsorptionsschritt auf A) Umgebungsdruck, auf B) Unterdruck bis zu 600 mbar oder auf C) Überdruck bis zu 0,2 bar fällt und dessen Einlaßende dabei a) geschlossen ist, b) gegenüber der Umgebung geöffnet ist oder c) ein Luftverdichter angeschlossen bleibt, Produktrestgas aus dem Auslaßende des Adsorbers A in das Auslaßende des Adsorbers B strömt, wobei Adsorber B sich zu Beginn dieses Schrittes auf seinem niedrigsten Druckniveau von 100 bis 600 mbar befindet, und gegebenenfalls Adsorber B gleichzeitig über sein Einlaßende evakuiert wird, wobei der Druck in Adsorber B a) ansteigt, b) gleich bleibt oder c) abfällt,

b) Umgebungsluft ohne zusätzliche Kompression in Adsorber A über dessen Einlassende eingeleitet wird, der Druck dabei in Adsorber A bei etwa Umgebungsdruck bleibt oder Adsorber A auf Umgebungsdruck aufgefüllt wird, $O_2$-reiches Gas am Auslaßende von Adsorber A abgenommen und in Adsorber B über dessen Einlaßende bis auf etwa Umgebungsdruck eingeleitet wird und gegebenenfalls zusätzliche Umgebungsluft ohne zusätzliche Kompression direkt in das Einlaßende des Adsorbers B eingeleitet wird,

c) Umgebungsluft mit Kompression in Adsorber B über dessen Einlaßende geleitet wird und gleichzeitig dem Produktpuffer Produktgas zugeführt wird, gegebenenfalls Produktgas aus dem Produktpuffer dem Auslaßende des Adsorbers B zugeführt wird und gleichzeitig Adsorber A über dessen Einlaßende evakuiert wird,

d) Adsorber A auf seinen niedrigsten Druck von 100 bis 600 mbar evakuiert wird und gleichzeitig in Adsorber B adsorbiert wird, indem Umgebungsluft mit Kompression über das Eintrittsende von Adsorber B geleitet wird und Produktgas über das Auslaßende von Adsorber B in den Produktpuffer geleitet wird und gegebenenfalls gleichzeitig Adsorber A über dessen Austrittsende mit Produktgas gespült wird.

Besonders bevorzugt wird das erfindungsgemäße Verfahren so durchgeführt, daß

a) nach der Adsorption in Adsorber A Produktrestgas aus dem Auslaßende des Adsorbers A, dessen Druck dabei von 0,2 bis 0,5 bar Überdruck auf etwa Umgebungsdruck fällt, in den Adsorber B, der sich auf dem niedrigsten Druckniveau von 100 bis 600 mbar befindet, über dessen Auslaßende geleitet wird und gegebenenfalls Adsorber B über das Einlaßende gleichzeitig evakuiert wird, wobei der Druck in Adsorber B bis auf max. 90 % des Umgebungsdruckes ansteigt oder gleichbleibt,

b) Umgebungsluft ohne zusätzliche Kompression in Adsorber A über dessen Einlaßende eingeleitet wird, $O_2$-reiches Gas am Auslaßende von Adsorber A abgenommen und in Adsorber B über dessen Einlaßende bis auf etwa Umgebungsdruck eingeleitet wird und gegebenenfalls zusätzliche Umgebungsluft ohne zusätzliche Kompression direkt in Adsorber B eingeleitet wird,

c) Umgebungsluft mit Kompression in Adsorber B über dessen Einlaßende geleitet wird und gegebenenfalls gleichzeitig Produktgas aus dem Produktpuffer in Adsorber B über dessen Auslaßende eingeführt wird und gleichzeitig Absorber A evakuiert wird,

d) Adorber A auf seinen niedrigsten Druck von 100 bis 600 mbar evakuiert wird und gleichzeitig in Adsorber B adsorbiert wird, indem Umgebungsluft mit Kompression über das Eintrittsende von Adsorber B durchgeleitet wird und Produktgas über das Austrittsende von Adsorber B in den Produktpuffer geleitet wird und gegebenenfalls gleichzeitig Adsorber A über dessen Austrittsende mit Produktgas gespült wird.

Es wurde ein Adsorptions-Prozeß zur $O_2$-Anreicherung von Luft in einem Zweibett-Adsorbersystem mit MS-Zeolithen gefunden, bei dem gegenüber herkömmlichen Verfahren der Energiebedarf zur Erzeugung des Sauerstoffs erheblich reduziert werden kann, in dem nach dem Adsorptionsschritt der Lufttrennung insbesondere bei 0,05 bis 0,5 bar (max. 1 bar, Überdruck) gegebenenfalls eine Druckabsenkung in Gleichstromrichtung zur Adsorption auf z.B. Umgebungsdruck erfolgt, dieses Entspannungsgas in bekannter Weise in einen bereits evakuierten Adsorber geführt wird, danach durch den entspannten Adsorber in Gleichstromrichtung der Adsorption Umgebungsluft geführt wird, an dessen Adsorberausthtt $O_2$-haltiges Gas abgezogen wird und dieses Austrittsgas in die Eintrittszone des evakuierten und gegebenenfalls teilweise wiederbespannten Adsorbers eingeführt wird, und diese Befüllung bei etwa Umgebungsdruck Fülldruck oder bei einer $O_2$-Konzentration des Füllgases von 15 bis 90 % beendet wird, wobei gegebenenfalls während des Füllens in die Eintrittszone des zu bespannenden Adsorbers gleichzeitig Umgebungsluft einströmt, danach dieser Adsorber weiter mit Umgebungsluft und gleichzeitig mit $O_2$ aus dem Puffer im Gegenstrom zur Adsorption auf einen Enddruck von 0,03 bis 0,5 bar, max. 1 bar (Überdruck) befüllt wird, vor Erreichen seines Enddrucks $O_2$-Produkt in einen Speicher abgegeben wird und zwar zu einer Zeit, in der der Speicherdruck geringfügig unter dem Adsorberdruck ist, während dieser Zeit der zweite Adsorber im Gegenstrom evakuiert wird und während der ganzen Evakuierungszeit oder am Ende des Evakuierungsschrittes mit $O_2$-Produktgas im Gegenstrom zur Lufttrennung gespült wird.

Das erfindungsgemäße Verfahren vermeidet die Nachteile der Rückführung und des Einführens von trockenem Gas in die Eintrittsseite der Trocknungszone. Es ergibt sich kein Zeitverlust durch die Rückführung und keine Begrenzung der Rückführgasmenge.

Die Rückführung des $O_2$-armen Produktgases (Restproduktgas) am Ende der $O_2$-Produktion (Adsorption) und gegebenenfalls der Umfüllschritt können in verschiedener Weise durchgeführt werden:

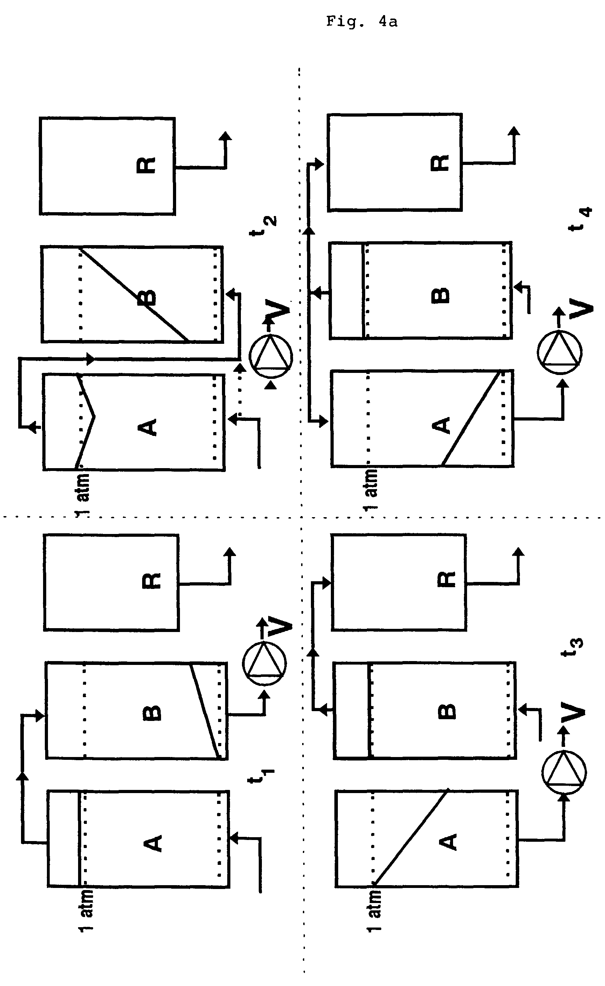

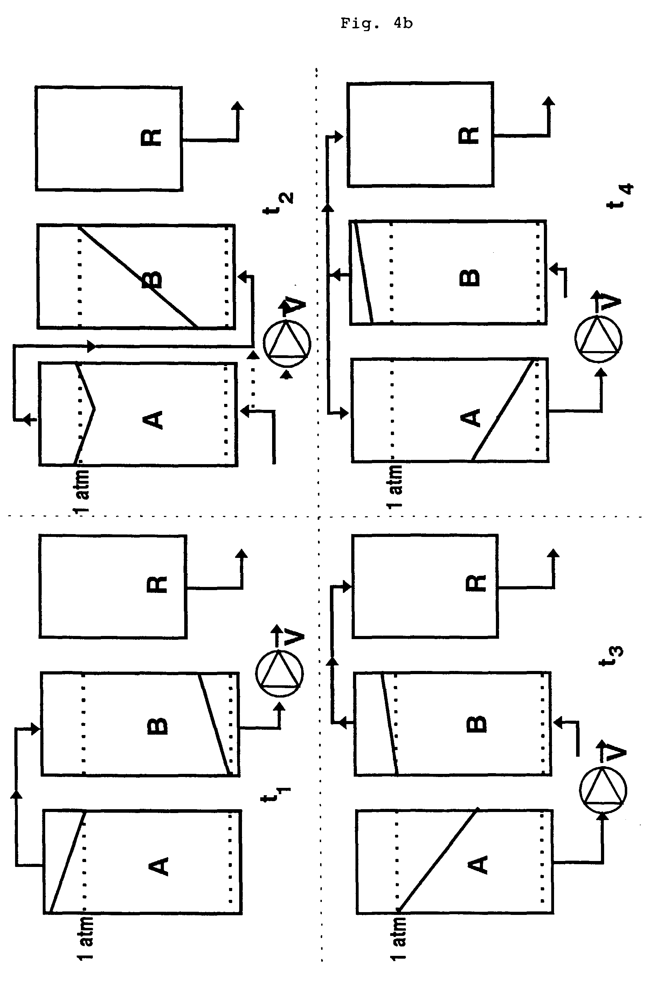

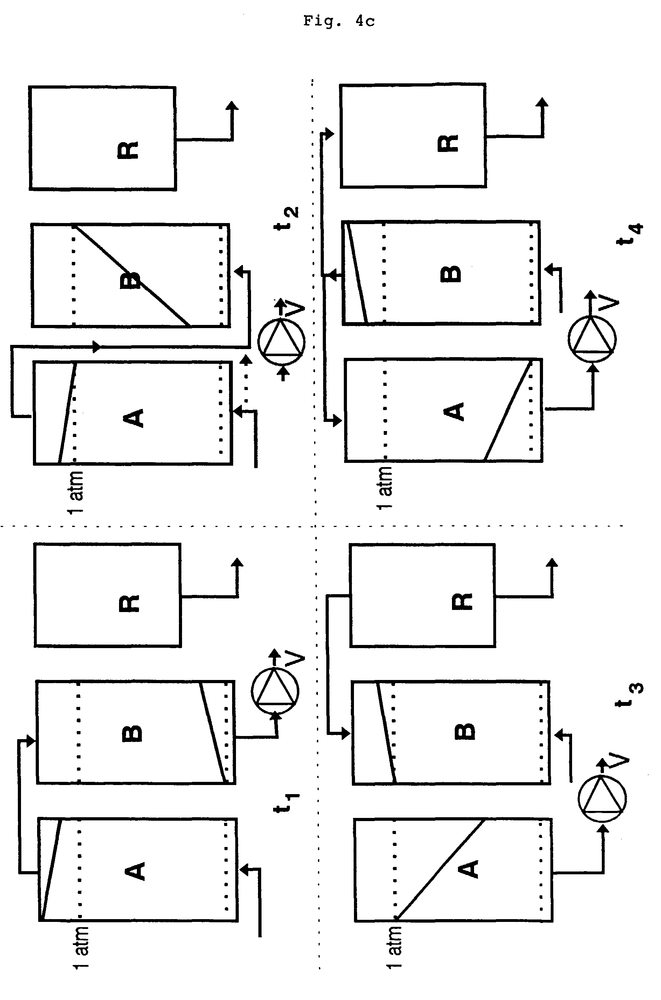

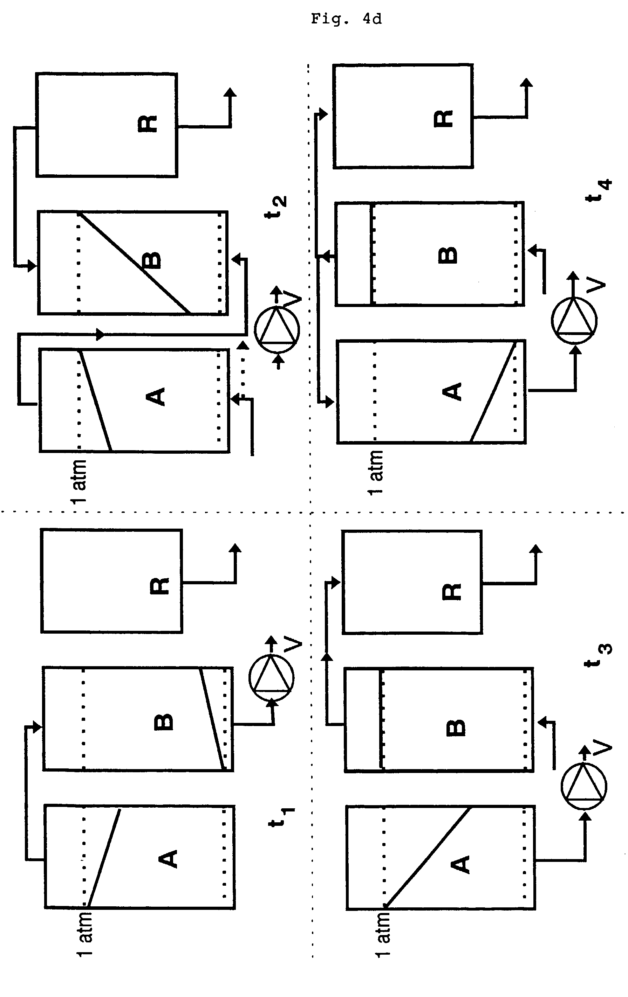

In den Abbildungen 4a bis 5d sind beispielhaft und schematisch die einzelnen Prozeßstufen eines halben Zyklus dargestellt. In den Adsorbern ist außerdem schematisch der Druckverlauf eingezeichnet.

Ausführungsform der Abbildung 4a: zur Zeit $t_1$ hat Adsorber "A" bei etwa 1 atm seinen $O_2$-Produktionsschritt beendet, die Luft geht weiterhin bei etwa 1 atm im Gleichstrom zur Adsorption durch Adsorber "A", am Adsorberaustritt wird $O_2$-haltiges Gas abgezogen, das im Gegenstrom zur Adsorption durch Adsorber "B" geleitet wird, die Vakuumpumpe an Adsorber "B" ist noch angeschlossen, die "Umfüllgasmenge" ist so bemessen, daß eine ausreichende Spülwirkung entsteht, wodurch eventuell der Druck im Adsorber nicht weiter sinkt, sondern konstant bleibt oder ansteigt. Im nächsten Schritt (Zeit $t_2$) wird weiterhin Luft im Gleichstrom durch z.B. den Adsorber "A" geleitet, am Adsorberaustritt wird $O_2$-armes Gas abgezogen und dieses Gas im Gleichstrom zur Adsorption in den Adsorber "B" geschickt, der auf Adsorptionsdruck gebracht werden soll, wobei gleichzeitig nach Bedarf Umgebungsluft im Gleichstrom zur Adsorption in den Adsorber "B" geschickt wird. Der Druck im $O_2$-Armgas abgebenden Adsorber "A" liegt bei etwa Umgebungsdruck. Die abgeführte $O_2$-Armgasmenge ist in der Gesamtmenge nicht begrenzt, da genügend Umgebungsluft zur nachträglichen Trennung zur Verfügung steht. Da das $O_2$-Armgas bei Umgebungsdruck erzeugt wird, kann durch den Druckverlust des Systems ein Unterdruck im $O_2$-Armgas abgebenden Adsorber entstehen (S. Abb. 4a, Zeit $t_2$). Anschließend wird in der Zeit $t_3$ Adsorber "A" im Gegenstrom zur Adsorption evakuiert, Adsorber "B" wird bei etwa Umgebungsdruck mit Luft durchströmt und $O_2$-Produkt in einen Produktspeicher eingeführt. Am Ende des Adsorptionsschrittes und Evakuierungsschrittes kann gegebenenfalls Adsorber "A" mit einem Teilstrom des Produktes gespült werden (Zeit $t_4$).

In einer anderen Ausführungsform verläuft gemäß Abbildung 4b der Gesamtprozeß ähnlich zu dem Prozeß der Abbildung 4a, nur die Lufttrennung wird bei einem Druck über Umgebungsdruck, z.B. 0,1 bis 0,6 bar durchgeführt. Danach werden nach dem Adsorptionsschritt die Adsorber "A" und "B" am Auslaßende verbunden, es erfolgt ein sogenannter BFP-Schritt, d.h. Adsorber "A" entspannt bis auf Umgebungsdruck in Adsorber "B", wobei Adsorber "B" noch an die Vakuumpumpe angeschlossen ist und der Druck im Adsorber "B" ansteigen kann. Die Entspannung von Adsorber "A" kann auch in zwei Stufen erfolgen, zuerst der "BFP-Schritt" von z.B. 0,5 bar auf 0,2 bar und Weiterführung des Druckausgleichs ("PB-Schritt") auf Umgebungsdruck in "A", wobei die Vakuumpumpe in "B" nicht angeschlossen ist.

In einer anderen Ausführungsform gemäß Abbildung 4c verläuft die $O_2$-Armgasrückführung in Adsorber A zur Zeit $t_2$ bei abnehmenden Überdruck von z.B. 0,1 bar herunter auf etwa Umgebungsdruck, da die Umfüllschritte "BFP" und/oder "PB" in Adsorber "A" bei 0,1 bar beendet wurden.

In einer anderen Ausführungsform verläuft gemäß Abbildung 4d die $O_2$-Armgasrückführung in Adsorber A zur Zeit $t_2$ bei zunehmendem Druck von z.B. 800 mbar (abs), d.h. beginnend bei Unterdruck aufsteigend auf etwa Umgebungsdruck, da die Umfüllschritte "BFP" und/oder "PB" in Adsorber "A" bei 800 mbar (abs) beendet wurden.

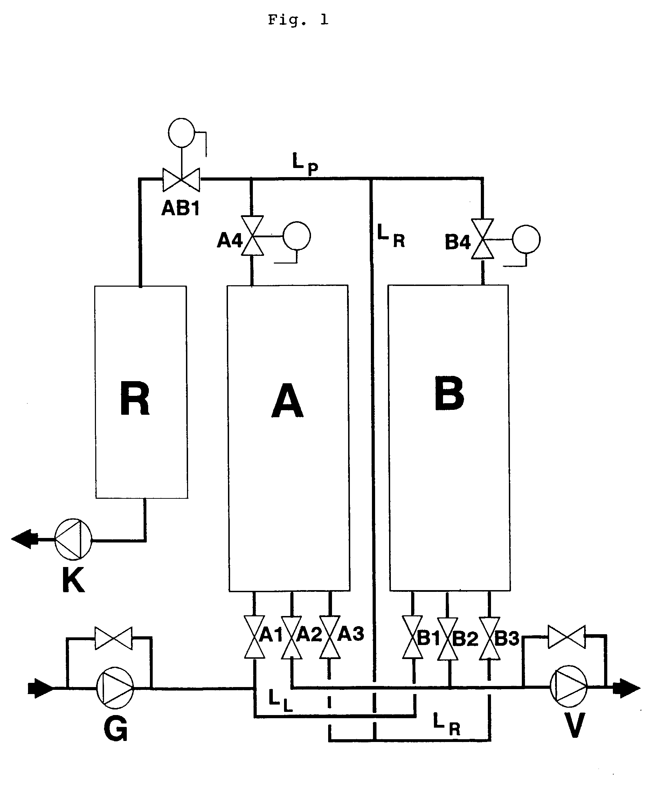

Anhand Fig. 1, 2a, 2b und 3 soll eine Durchführung des erfindungsgemäßen Verfahrens näher erläutert werden.

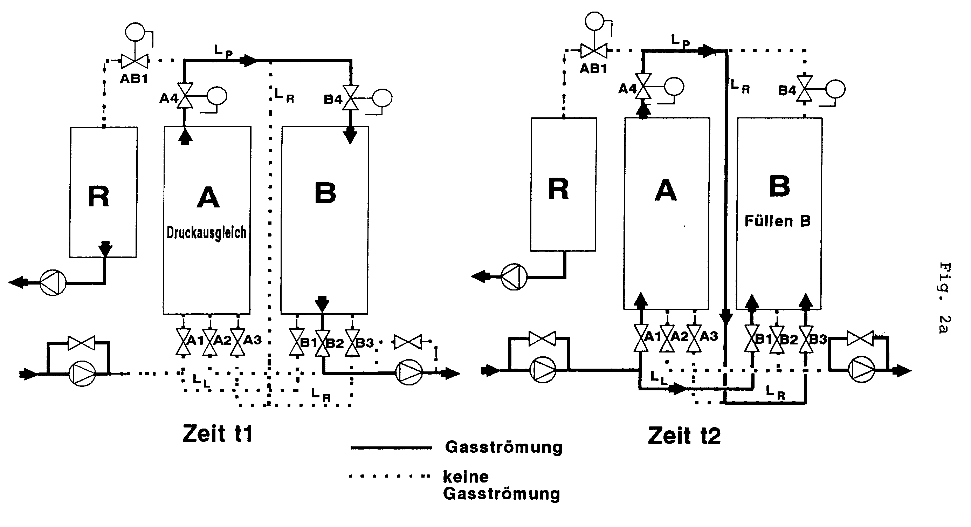

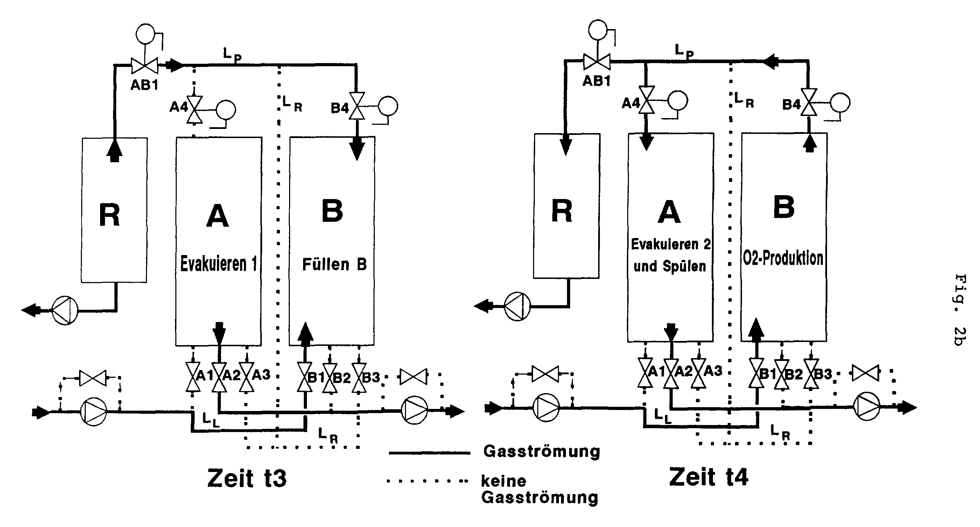

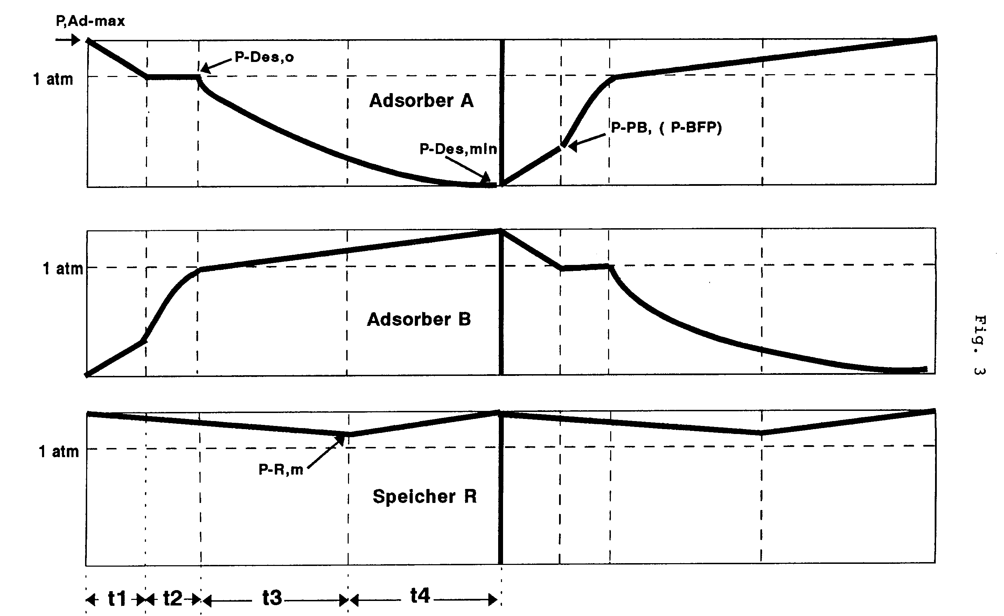

In Fig. 3 ist der zeitliche Druckverlauf der Adsorber A und B und des $O_2$-Puffers aufgezeigt, in Fig. 2a und 2b sind die Prozeßstufen zu den jeweiligen Zeiten dargestellt.

Zeit $t_1$: Über Ventil A4/B4 erfolgt ein teilweiser Druckausgleich. Ventile A1/A2/A3/B1/B3/AB1 sind geschlossen. Das Luftgebläse "G" läuft im Kreislauf. Ventil B2 kann geschlossen werden, hierbei entsteht ein "reiner" Druckausgleich (PB), die Vakuumpumpe "V" läuft dann im Kreislauf. Es ist aber auch möglich die Auffüllung im PB-Schritt zu beschleunigen, indem zusätzlich Ventil B1 geöffnet wird und dadurch von der Eintrittsseite her Luft aus Gebläse "G" einströmt. In einer anderen Variante ist Ventil B2 auf (BFP-Prozeß), wodurch Adsorber B weiterhin evakuiert wird. Während der Zeit $t_1$ steigt der Druck im Adsorber von $P_{-des,\,min}$ auf $P_{-PB}$ bzw. $P_{-BFP}$ Es ist auch eine Kombination der Schritte BFP und PB möglich, d.h. zuerst erfolgt der BFP-Schritt (d.h. inklusive Evakuieren), Absenkung des Druckes des Adsorbers A auf über Umgebungsdruck, danach der PB-Schritt (d.h. teilweiser Druckausgleich) mit einer Entspannung des Adsorbers A auf etwa Umgebungsdruck (oder geringfügig tiefer). Der Umfüllschritt (PB) kann auch über Ventil A4/B3 und Leitungen $L_P$ und $L_R$ erfolgen, wobei gegebenenfalls noch gleichzeitig über Ventil B1 Adsorber B mit Luft aufgefüllt wird. Während Zeit $t_1$ wird aus Speicher "R" $O_2$-reiches Produkt zum Verbraucher abgezogen.

Zeit $t_2$: Ventile A4, B3 und A1, B1 sind geöffnet, restliche Ventile sind geschlossen. Der Luftverdichter wird bei ca. Umgebungsdruck betrieben, Luft strömt über Ventil A1 in Adsorber A, $O_2$-armes Gas verläßt Adsorber A über Ventil A4, strömt in eine Rückführleitung $L_R$ und strömt über Ventil B3 in Adsorber B, wobei gegebenenfalls zusätzlich Luft über die Luftleitung $L_L$ in Adsorber B (Ventil B1) strömt (= RBF-Schritt). Hierbei läuft die Vakuumpumpe im Kreislauf. Durch den Druckverlust der Schüttung des Adsorbers kann zur Zeit $t_2$ der Druck im Adsorber A leicht unter Umgebungsdruck abfallen. Die $O_2$-Armgasmenge, die über Leitung $L_R$ in Adsorber B gelangt, kann über Regelung der Luftmenge an Ventil B1 eingestellt werden, z.B. durch verzögertes Öffnen von B1. Diese Luftmenge hängt von dem minimalen Absaugdruck, der Differenz des Entspannungsdrucks in Adsorber "A" und der Menge des zurückgeführten $O_2$-reichen Gases ab. Die Rückführung des $O_2$-armen Gases ist beendet, wenn der Auffülldruck bei etwa Umgebungsdruck liegt oder dessen $O_2$-Konzentrationen etwa 15-90 Vol.-% erreicht. Wenn wegen einer zu geringen Differenz des Auffülldrucks (zwischen Umgebungsdruck und Evakuierungsdruck) die Füllgasmenge begrenzt ist, kann die

$O_2$-Endkonzentration des Füllgases auch weit über 21 % liegen. In diesem Fall ist eine zusätzliche Befüllung von "B" mit Luft nicht notwendig.

Zeit $t_3$: Adsorber A wird über Ventil A2 abgesaugt. Adsorber B wird über Ventil B1 mit Hilfe des Luftkompressors bespannt, wobei die Ventile B2/B3 geschlossen sind oder in einer anderen Ausführungsform über Ventil B4 und AB1 gleichzeitig mit $O_2$-Produkt aus dem Speicher "R" befüllt wird. Während der Evakuierung von Adsorber A kann über Ventil AB1/A4 Adsorber A mit Produkt gespült werden. Ende der Zeit $t_3$ ist erreicht, wenn der Speicherdruck von maximal $P_{Ad-max}$ auf seinen niedrigsten Druck $P_{R,m}$ abgefallen ist.

Zeit $t_4$: Adsorber A wird über Ventil A2 auf seinen niedrigsten Druck $P_{Des,min}$ abgesaugt und gleichzeitig über Ventil A4 mit Produktgas aus der Produktgasleitung $L_P$ gespült. Das Spülgas, das über Ventil A4 in den Adsorber A gelangt, muß entsprechend in seiner Menge optimiert werden. Im Falle eines BFP-Prozesses (siehe Zeit $t_1$) ist diese Spülgasmenge sehr gering oder kann weggelassen werden. Adsorber B wird weiterhin über Ventil B1 auf seinen Enddruck gebracht, innerhalb Zeit $t_4$ erfolgt die $O_2$-Produktabgabe in den Speicher "R".

Der Prozeß wird analog zu den Prozeßschritten (Zeiten $t_1$-$t_4$) durch Umtauschen der Adsorber A und B fortgeführt.

Als Adsorptionsmittel für das ertindungsgemäße Verfahren zur $O_2$-Anreicherung von Luft eignen sich Molekularsiebzeolithe mit bevorzugter Adsorption von $N_2$ gegenüber $O_2$, wie Zeolith A und X in der Na-Form oder in der mit zweiwertigen (Erd)-Alkaliionen (wie Ca, Mg, Sr oder deren Mischungen) ausgetauschten Form oder in der mit einwertigen lonen, wie Lithium ausgetauschten Form mit Austauschgraden über 85 %, oder natürliche Zeolithe bzw. deren synthetisch hergestellte Formen, wie Mordenit oder Chabazit.

Das erfindungsgemäße Verfahren soll in den nachfolgenden Beispielen näher erläutert werden.

**Beispiele**

Für alle Beispiele blieben folgende Daten konstant:

| | |
|---|---|
| Speichervolumen | $1,5 \text{ m}^3$ |
| Adsorberinnendurchmesser: | 550 mm |
| Adsorberschütthöhe: | 1.800 mm |
| Umgebungsdruck | ca. 1045 mbar |

Adsorptionsmittelfüllung je Adsorber:

$56 \text{ dm}^3$ mittelporiges Kieselgel am unteren Ende des Adsorbers, Restschüttung jeweils 240 kg Molekularsieb-Ca-Zeolith A, hergestellt entsprechend EP-A 0 170 026, Beispiel 2. Die Kalzinierung erfolgte im Stickstoffstrom bei 500 bis 600°C. Das molare $CaO/Al_2O_3$-Verhältnis betrug 0,72. Die Körnung betrug 1 - 2,5 mm im Durchmesser Kugelform.

Das zugeführte Rohgas hatte eine Temperatur von +30°C und war stets bei Umgebungsdruck und 30°C zu 75 % wassergesättigt. Als Vakuumpumpe wurde ein über Getriebe einstellbares 2-stufiges Drehkolbengebläse ("Roots") verwendet. Das Rohgas wurde über ein Drehkolbengebläse verdichtet. Der Druck wurde jeweils am unteren Ende (Lufteintrittsseite) des Adsorbers gemessen.

Der Energiebedarf der Vakuumpumpe wurde aus dem Druckverlauf während des Abpumpens vor der Schüttung errechnet, indem die Kennlinie (=Energiebedarf in Abhängigkeit vom Absaugdruck) eines bekannten Wälzkolbengebläses mit einer Absaugkapazität von $20.000 \text{ m}^3$/h bei 1,03 bar, abs. herangezogen wurde.

Der Energiebedarf des Luftgebläses wurde nach folgender Formel berechnet:

$$\frac{(0,306 \times P_m - 286) \times Vo}{10.621 \times \mu}$$

Pm = 1045 mbar
Vo = Luftmenge bei 1,03 bar, abs. ($\text{m}^3$/h)
$\mu$ = Wirkungsgrad = 0,95

**Beispiel 1** (Vergleich)

Es wurde eine Anlage entsprechend Abbildung 5 verwendet. Der Prozeßverlauf und der Druckverlauf sind in Abbildung 6 wiedergegeben.

Zeit $t_1$: 0 bis 4 Sekunden

Es befand sich ein Luftverdichter im Kreislauf. Der Druck in Adsorber B stieg von $P_{Des-min}$ = 250 mbar auf $P_{BFP}$ = 450 mbar, gleichzeitig fiel in Adsorber A der Maximaldurck $P_{Ad-max}$ = 0,3 bar ab, wobei am oberen Ende aus Adsorber A über Ventil A03 Gas über Ventil B03 in Adsorber B geleitet wurde, am unteren Ende über Ventil B02 mit einer Vakuumpumpe Adsorber B evakuiert wurde. Der Druck im Adsorber A sank auf $P_{Des,o}$ = 990 mbar ab. Speicher R lieferte Produktgas bei einem Druck von ca. 0,3 bar; Ventil AB01 war geschlossen.

Zeit $t_2$: 4 bis 9 Sekunden

Adsorber A wurde über Ventil A02 auf etwa 650 mbar evakuiert, das obere Ende des Adsorbers war geschlossen. Adsorber B wurde mit Luft aus dem Luftverdichter "G" am unteren Ende über Ventil B01 auf 1 atm bespannt, gleichzeitig erfolgte eine Befüllung mit Gas aus dem Speicher "R" über ein mengengeregeltes Ventil AB01 und Ventil B03, wobei der Druck im Speicher von ca. 0,3 bar auf etwa 0,2 bar abfiel. Aus Speicher R wurde weiterhin Produktgas abgezogen.

Zeit $t_3$; 9 bis 13 Sekunden

Adsorber A wurde weiter evakuiert, Adsorber B mit Luft aus Luftverdichter "G" und Produkt aus dem Speicher "R" wie in Zeit $t_2$ befüllt. Speicherdruck und Druck in Adsorber B erreichten 0,05 bar.

Zeit $t_4$; 13 bis 30 Sekunden

Adsorber A wurde weiter evakuiert, wobei ein Enddruck von 250 mbar erreicht wurde. Über den Luftverdichter "G" und Ventil B01 strömte Luft in Adsorber B, Produktgas wurde über Ventil B03 und AB01 in Speicher R eingetragen, der Druck in Adsorber A und im Speicher R erreichte einen Enddruck von 0,3 bar.

Der Prozeß lief weiter analog zu den Zeiten $t_1/t_2/t_3/t_4$, nur wurde Adsorber A gegen Adsorber B ausgetauscht.

Es wurde eine Produktgasmenge aus Speicher R von 19 $Nm^3$/h mit einer $O_2$-Konzentration von 93 % gewonnen. Die $O_2$-Ausbeute betrug 46 %, der spezifische Energiewert der Vakuumpumpe wurde mit 0,378 $KWh/Nm^3O_2$ errechnet, der Gesamtenergiewert aus Pumpe und Luftverdichter betrug 0,472 $KWh/Nm^3O_2$.

**Beispiel 2** (Vergleich)

Es wurde eine Anlage entsprechend Abbildung 5 verwendet. Der Prozeßverlauf und der Druckverlauf sind in Abbildung 6 wiedergegeben. Während der Zeit $t_1$ wurde jedoch die Vakuumpumpe vom Adsorber mit den Ventilen A02 bzw. B02 getrennt.

Zeit $t_1$; 0 bis 4 Sekunden

Ventil B01 war geöffnet. Umgebungsluft strömte in den evakuierten Adsorber B. Ventil B02 war geschlossen. Der Druck in Adsorber B stieg von $P_{Des\text{-}min}$ = 250 mbar auf $P_{PB\text{-}1}$ = 650 mbar, gleichzeitig fiel der Druck in Adsorber A von seinem maximalen Wert $P_{Ad\text{-}max}$ = 0,3 bar auf $P_{Des,o}$ = 990 mbar ab, wobei am oberen Ende über Ventil A03 aus Adsorber A Gas über Ventil B03 in Adsorber B strömte. Speicher R lieferte Produktgas bei einem Druck von ca. 0,3 bar; Ventil AB01 war geschlossen.

Zeit $t_2$; 4 bis 9 Sekunden

Adsorber A wurde über Ventil A02 auf etwa 650 mbar evakuiert, oberes Ende des Adsorbers war geschlossen. Adsorber B wurde mit Luft aus dem Luftverdichter am unteren Ende über Ventil B01 auf Umgebungsdruck bespannt, gleichzeitig erfolgte eine Befüllung mit Gas aus dem Speicher R über ein mengengeregeltes Ventil AB01 und Ventil B03, wobei der Druck im Speicher von ca. 0,3 bar auf etwa 0,2 bar abfiel. Aus Speicher R wurde weiterhin Produktgas abgezogen.

Zeit $t_3$; 9 bis 13 Sekunden

Adsorber A wurde weiter evakuiert, Adsorber B mit Luft und Produktgas aus dem Speicher wie in der Zeit $t_2$ befüllt, Speicherdruck und Druck in Adsorber B erreichten etwa Umgebundsdruck.

Zeit $t_4$; 13 bis 30 Sekunden

Adsorber A wurde weiter evakuiert, wobei ein Enddruck von 250 mbar erreicht wurde. Über Ventil B01 strömte Luft in Adsorber B, Produktgas wurde über Ventil B03 und AB01 in Speicher R eingetragen, der Druck in Adsorber A und im Speicher R erreichte einen Enddruck von 0,3 bar. Während dieser Zeit wurde Adsorber A mit $O_2$-Produktgas und zwar über das mengengeregelte Ventil B03 gespült, wobei die Spülgasmenge anhand einer maximalen $O_2$-Konzentration von 18 Vol.-% im Restgas hinter der Vakuumpumpe eingestellt wurde.

Der Prozeß lief weiter analog zu den Zeiten $t_1/t_2/t_3/t_4$, nur wurde Adsorber A gegen Adsorber B ausgetauscht.

Es wurde eine Produktgasmenge aus Speicher R von 17,68 $Nm^3$/h mit einer $O_2$-Konzentration von 93 % gewonnen. Die $O_2$-Ausbeute betrug 44 %, der spezifische Energiewert der Vakuumpumpe wurde mit 0,379 $KWh/Nm^3O_2$ errechnet, der Gesamtenergiewert aus Pumpe und Luftverdichter betrug 0,468 $KWh/Nm^3O_2$.

**Beispiel 3** (Vergleich; gemäß EP-A 0 334 495 (Fig. 3d/4d))

Es wurde eine Anlage entsprechend Abbildung 1 verwendet. Der Prozeßverlauf und der Druckverlauf sind aus Abbildung 6 ersichtlich.

Zeit $t_1$; 0 bis 4 Sekunden

Ein Luftverdichter befand sich im Kreislauf. Der Druck in Adsorber B stieg von $P_{Des\text{-}min}$ = 250 mbar auf $P_{BF\text{-}1}$ = 450 mbar, gleichzeitig fiel in Adsorber A der Druck ausgehend von seinem Maximaldruck $P_{Ad\text{-}max}$ = 0,3 bar ab, wobei am oberen Ende aus Adsorber A über Ventil A4 Gas über Ventil B4 in Adsorber B strömte und am unteren Ende über Ventil B3 mit einer Vakuumpumpe Adsorber B evakuiert wurde. Der Druck in Adsorber A fiel auf $P_{Des,o}$ = 990 mbar ab.

Speicher R lieferte Produktgas bei einem Druck von ca. 0,3 bar; Ventil AB1 war geschlossen.

Zeit $t_{2a}$: 4 bis 6 Sekunden

Adsorber A wurde über Ventil A2 auf etwa 650-700 mbar evakuiert, das obere Ende des Adsorbers A war über Ventil A4 geöffnet. Adsorber B wurde mit $O_2$-armem Gas aus Adsorber A auf etwa 650 mbar befüllt und zwar über Ventil A4, die Leitungen $L_P$ und $L_R$ und Eintrittsventil B3. Aus Speicher R wurde Produktgas abgezogen.

Zeit $t_{2b}$: 6 bis 9 Sekunden

Adsorber A wurde über Ventil A2 auf etwa 450 mbar evakuiert, das obere Ende des Adsorbers A war geschlossen. Adsorber B wurde mit Luft aus dem Luftverdichter am unteren Ende über Ventil B1 und mit Gas aus dem Speicher R (Ventile AB1 und B4) auf ca. Umgebungsdruck bespannt. Aus Speicher R wurde weiterhin Produktgas abgezogen, der Druck des Speichers R sank auf 0,15 bar.

Zeit $t_3$: 9 bis 13 Sekunden

Adsorber A wurde weiter evakuiert, Adsorber B mit Luft und Produktgas aus dem Speicher wie in der Zeit $t_{2b}$ befüllt; Speicher und Druck im Adsorber B erreichten 0,05 bar.

Zeit $t_4$: 13 bis 30 Sekunden

Adsorber A wurde weiterhin evakuiert, über Ventil A4 wurde $O_2$-Gas als Spülgas eingelassen, wobei ein Enddruck von 250 mbar erreicht wurde. Über Ventil B1 strömte Luft in Adsorber "B", Produktgas strömte über die Ventile B4 und AB1 in den Speicher R; der Druck in Adsorber A und im Speicher R erreichte einen Enddruck von 0,3 bar. Die $O_2$-Spülgasmenge wurde mit Ventil A4 eingestellt.

Der Prozeß lief weiter analog zu den Zeiten $t_1/t_{2a}/t_{2b}/t_3/t_4$, nur wurde Adsorber A gegen Adsorber B ausgetauscht.

Es wurde eine Produktgasmenge aus Speicher R von 19,8 $Nm^3/h$ mit einer $O_2$-Konzentration von 93 % gewonnen. Die $O_2$-Ausbeute betrug 47,5 %, der spezifische Energiewert der Vakuumpumpe wurde mit 0,375 $KWh/Nm^3 O_2$ errechnet, der Gesamtenergiewert aus Pumpe und Luftverdichter betrug 0,466 $KWh/Nm^3 O_2$.

**Beispiel 4** (erfindungsgemäß)

Es wurde eine Anlage entsprechend Abbildung 1 verwendet. Der Prozeßverlauf ist in Abbildung 2a/2b und der Druckverlauf ist in Abbildung 3 wiedergegeben. Während der Zeit $t_1$ wurde die Vakuumpumpe vom Adsorber mit den Ventilen A2 bzw. B2 getrennt.

Zeit $t_1$: 0 bis 4 Sekunden

Alle Ventile der Adsorber A und B außer A4 und B4 waren geschlossen. Dadurch strömte $O_2$-reiches Gas aus Adsorber A in den vorher evakuierten Adsorber B. Der Druck in Adsorber B stieg von $P_{Des-min} = 250$ mbar auf $P_{PB-1} = 650$ mbar, gleichzeitig fiel in Adsorber A der Druck $P_{Ad-max} = 0,3$ bar (Überdruck) auf $P_{Des,o} =$ Umgebungsdruck. Speicher R lieferte Produktgas bei einem Druck von ca. 0,3 bis 0,25 bar.

Zeit $t_2$: 9 bis 13 Sekunden

Adsorber B wurde auf etwa Umgebungsdruck gefüllt, indem Luft über Ventil A1 in Adsorber A strömte, über Ventil A4 $O_2$-armes Gas abgezogen wurde und über Leitungen $L_P$ und $L_R$ und Ventil B3 in Adsorber B strömte. Gleichzeitig wurde Adsorber B mit Luft über das mengengeregelte Ventil B1 aufgefüllt. Die Füllung mit $O_2$-armen Gas über Leitung $L_R$ wurde bei einer $O_2$-Konzentration von 20-40 Vol.-% beendet. Aus Speicher R wurde weiterhin Produktgas abgezogen.

Zeit $t_3$: 9 bis 13 Sekunden

Adsorber A wurde über Ventil A2 von Umgebungsdruck auf etwa 650 mbar evakuiert, Adsorber B mit Luft über Ventil B1 und mit Produktgas über Ventile AB1 und B4 aus dem Speicher befüllt, bis Speicherdruck und Druck im Adsorber B etwa das gleiche Niveau erreichten. Aus Speicher R wurde weiterhin Produktgas abgezogen.

Zeit $t_4$: 13 bis 30 Sekunden

Adsorber A wurde weiterhin evakuiert, wobei ein Enddruck von 250 mbar erreicht wurde. Hierbei wurde zur Unterstützung der $N_2$-Desorption über Ventil A4 $O_2$-reiches Gas in den Adsorber A eingeführt und zwar in einer Menge, daß die $O_2$-Konzentration des Abgases der Vakuumpumpe einen Wert von 18 Vol.-% nicht überschritt. Mit Hilfe des Luftgebläses wurde Adsorber B auf seinen Enddruck von 0,3 bar bespannt. Produktgas strömte über Ventil B4 und AB1 in Speicher R.

Der Prozeß lief weiter analog zu den Zeiten $t_1/t_2/t_3/t_4$, nur wurde Adsorber A gegen Adsorber B ausgetauscht.

Es wurde eine Produktgasmenge aus Speicher R von 22 $Nm^3/h$ mit einer $O_2$-Konzentration von 93 % gewonnen. Die $O_2$-Ausbeute betrug 48 %, der spezifische Energiewert der Vakuumpumpe wurde mit 0,341 $KWh/Nm^3 O_2$ errechnet, der Gesamtenergiewert aus Pumpe und Luftgebläse betrug 0,437 $KWh/Nm^3 O_2$.

**Beispiel 5** (erfindungsgemäß)

Es wurde eine Anlage entsprechend Abbildung 1 verwendet. Der Druckverlauf über die Zeit wurde in Abbildung 3 wiedergegeben. Der Prozeßverlauf ist aus Abbildung 2a/2b zu erkennen.

Zeit $t_1$: 0 bis 4 Sekunden

Nur die Ventile B2, B4 und A4 waren geöffnet; Adsorber B war an die Vakuumpumpe angeschlossen. Dadurch strömte $O_2$-reiches Gas aus Adsorber A in den vorher evakuierten Adsorber B. Der Druck in Adsorber B stieg von $P_{Des-min}$ = 250 mbar auf $P_{BFP-1}$ = 450 mbar, gleichzeitig fiel in Adsorber A der Druck $P_{Ad-max}$ = 0,3 bar auf $P_{Des,o}$ = Umgebundsdruck. Speicher R lieferte Produktgas bei einem Druck von ca. 0,3 bis 0,25 bar.

Zeit $t_2$: 4 bis 9 Sekunden

Adsorber B wurde auf etwa Umgebungsdruck gefüllt, indem Luft über Ventil A1 in Adsorber A strömte, über Ventil A4 $O_2$-armes Gas abgezogen wurde, über Leitungen $L_P$ und $L_R$ und Ventil B3 in Adsorber B bespannt. Gleichzeitig wurde Adsorber B mit Luft über das mengengeregelte Ventil B1 aufgefüllt. Die Füllung mit $O_2$-armem Gas über Leitung $L_R$ wurde bei einer $O_2$-Konzentration von 20-40 Vol.-% beendet. Aus Speicher R wurde weiterhin Produktgas abgezogen.

Zeit $t_3$: 9 bis 13 Sekunden

Adsorber A wurde über Ventil A2 von Umgebungsdruck auf etwa 650 mbar evakuiert, Adsorber B mit Luft über Ventil B1 und mit Produktgas über Ventile AB1 und B4 aus dem Speicher befüllt, bis Speicherdruck und Druck im Adsorber B etwa das gleiche Niveau erreichten. Aus Speicher R wurde weiterhin Produktgas abgezogen.

Zeit $t_4$: 13 bis 30 Sekunden

Adsorber A wurde weiterhin evakuiert, wobei ein Enddruck von 250 mbar erreicht wurde. Mit Hilfe des Luftgebläses wurde Adsorber B auf einen Enddruck von 0,3 bar bespannt. Produktgas strömte über Ventil B4 und AB1 in Speicher R. Adsorber A wurde nicht mit $O_2$-Produktgas gespült.
Der Prozeß lief weiter analog zu den Zeiten $t_1$/$t_2$/$t_3$/$t_4$, nur wurde Adsorber A gegen Adsorber B ausgetauscht.
Es wurde eine Produktgasmenge aus Speicher R von 22 $Nm^3$/h mit einer $O_2$-Konzentration von 93 % gewonnen. Die $O_2$-Ausbeute betrug 51 %, der spezifische Energiewert der Vakuumpumpe wurde mit 0,342 KWh/$Nm^3 O_2$ errechnet, der Gesamtenergiewert aus Pumpe und Luftgebläse betrug 0,438 KWh/$Nm^3 O_2$.

**Beispiel 6** (erfindungsgemäß)

Es wurde eine Anlage entsprechend Abbildung 1 verwendet. Der Prozeßverlauf und der Druckverlauf sind in Abbildung 3 wiedergegeben. Prozeßverlauf und Druckverlauf über die Zeit sind aus den Abbildungen 2a/2b und 3 zu erkennen.

Zeit $t_1$: 0 bis 4 Sekunden

Nur Ventile B2, B4 und A4 waren geööfnet; Adsorber B war an die Vakuumpumpe angeschlossen. Hierbei strömte $O_2$-reiches Gas aus Adsorber A in den vorher evakuierten Adsorber B. Der Druck in Adsorber B stieg von $P_{Des-min}$ = 250 mbar auf $P_{BFP-1}$ = 450 mbar, gleichzeitig fiel in Adsorber A der Druck $P_{Ad-max}$ = 0,3 bar auf $P_{Des,o}$ = 1 atm. Speicher R lieferte Produktgas bei einem Druck von ca. 0,3 bis 0,25 bar.

Zeit $t_2$: 4 bis 9 Sekunden

Adsorber B wurde auf etwa Umgebungsdruck gefüllt, indem Luft über Ventil A1 in Adsorber A strömte, über Ventil A4 $O_2$-armes Gas abgezogen wurde. Über Leitungen $L_P$ und $L_R$ und Ventil B3 wurde Adsorber B damit bespannt. Gleichzeitig wurde Adsorber B mit Luft über das mengengeregelte Ventil B1 aufgefüllt. Die Füllung mit $O_2$-armem Gas über Leitung $L_R$ wurde bei einer $O_2$-Konzentration von 20-40 Vol.-% beendet. Aus Speicher R wurde weiterhin Produktgas abgezogen.

Zeit $t_3$: 9 bis 13 Sekunden

Adsorber A wurde über Ventil A2 von Umgebungsdruck auf etwa 650 mbar evakuiert, Adsorber B mit Luft über Ventil B1 und mit Produktgas über Ventile AB1 und B4 aus dem Speicher befüllt, bis Speicherdruck und Druck im Adsorber B etwa das gleiche Niveau erreichten. Aus Speicher R wurde weiterhin Produktgas abgezogen.

Zeit $t_4$: 13 bis 30 Sekunden

Adsorber A wurde weiterhin evakuiert, wobei ein Enddruck von 250 mbar erreicht wurde. Mit Hilfe des Luftgebläses wurde Adsorber B auf seinen Eindruck von 0,3 bar bespannt. Produktgas strömte über Ventil B4 und AB1 in Speicher R. Adsorber A wurde mit $O_2$-Produktgas gespült, indem Produktgas aus Leitung $L_P$ über Ventil A4 in Adsorber A strömte. Mit Ventil A4 wurde die Spülgasmenge eingestellt.
Der Prozeß lief weiter analog zu den Zeiten $t_1$/$t_2$/$t_3$/$t_4$, nur wurde Adsorber A gegen Adsorber B ausgetauscht.
Es wurde eine Produktgasmenge aus Speicher R von 22,5 $Nm^3$/h mit einer $O_2$-Konzentration von 93 % gewonnen. Die $O_2$-Ausbeute betrug 52 %, der spezifische Energiewert der Vakuumpumpe wurde mit 0,339 KWh/$Nm^3 O_2$ errechnet, der Gesamtenergiewert aus Pumpe und Luftgebläse betrug 0,433 KWh/$Nm^3 O_2$.
Der Vergleich der Beispiele 3 und 1 zeigt, daß die Rückführung des $O_2$-armen Produktgases des Bei-

spiels 3 eine Erhöhung der $O_2$-Ausbeute bringt, aber wegen eines nachteiligen Druckprofils beim Abpumpen keine Verbesserung des Strombedarfs der Vakuumpumpe erreicht wird.

Hingegen zeigt die Abgabe des $O_2$-armen Produktgases nach dem Adsorptionsschritt bei etwa Umgebungsdruck in den erfindungsgemäßen Beispielen 4 bis 6 gegenüber den Vergleichsbeispielen 1 bis 3 eine deutliche Verbesserung des Energiebedarfs der Vakuumpumpe.

**Patentansprüche**

1.  Verfahren zur Trennung von Luft durch Adsorption mit Molekularsieb-Zeolithen in einem Zweibett-Adsorbersystem mit Produktpuffer zur Aufrechterhaltung eines kontinuierlichen, konstanten Sauerstoffproduktstromes, wobei die zwei Adsorberbetten mit Molekularsieb-Zeolithen in einer einheitlichen oder in mehreren unterschiedlichen Schüttungen verschiedener Zeoltihtypen vorliegen und sich gegebenenfalls eine Schicht eines für Wasser selektiven Adsorptionsmittels vor den Schüttungen befindet, bei dem bei etwa Umgebungsdruck oder bis zu einem Überdruck von 0,5 bar während der Adsorption Luft durch den ersten Adsorber A geleitet wird und Stickstoff am Molekularsieb-Zeolithen bevorzugt gegenüber Sauerstoff adsorbiert wird, wobei sauerstoffreiches Produktgas mit einer $O_2$-Konzentrationen von 60 bis 96 Vol.-% am Austrittsende des Adsorbers A erhalten wird, nach der Adsorption die Desorption des Stickstoffes und gegebenenfalls der Feuchtigkeit durch Evakuieren im Gegenstrom zur Adsorption bei einem untersten Druck von 100 mbar bis 600 mbar (absolut) durchgeführt wird, dadurch gekennzeichnet, daß

    a) nach der Adsorption in Adsorber A, dessen Druck von seinem Endwert nach dem Adsorptionsschritt auf A) Umgebungsdruck, auf B) Unterdruck bis zu 600 mbar oder auf C) Überdruck bis zu 0,2 bar fällt und dessen Einlaßende dabei a) geschlossen ist, b) gegenüber der Umgebung geöffnet ist oder c) ein Luftverdichter angeschlossen bleibt, Produktrestgas aus dem Auslassende des Adsorbers A in das Auslassende des Adsorbers B strömt, wobei Adsorber B sich zu Beginn dieses Schrittes auf seinem niedrigsten Druckniveau von 100 bis 600 mbar befindet, und gegebenenfalls Adsorber B gleichzeitig über sein Einlaßende evakuiert wird, wobei der Druck in Adsorber B a) ansteigt, b) gleich bleibt oder c) abfällt,

    b) Umgebungsluft ohne zusätzliche Kompression in Adsorber A über dessen Einlassende eingeleitet wird, der Druck dabei in Adsorber A bei etwa Umgebungsdruck bleibt oder Adsorber A auf Umgebungsdruck aufgefüllt wird, $O_2$-reiches Gas am Auslaßende von Adsorber A abgenommen und in Adsorber B über dessen Einlaßende bis auf etwa Umgebungsdruck eingeleitet wird und gegebenenfalls zusätzliche Umgebungsluft ohne zusätzliche Kompression direkt in das Einlaßende des Adsorbers B eingeleitet wird,

    c) Umgebungsluft mit Kompression in Adsorber B über dessen Einlaßende geleitet wird und gleichzeitig dem Produktpuffer Produktgas zugeführt wird, gegebenenfalls Produktgas aus dem Produktpuffer dem Auslaßende des Adsorbers B zugeführt wird und gleichzeitig Adsorber A über dessen Einlaßende evakuiert wird,

    d) Adsorber A auf seinen niedrigsten Druck von 100 bis 600 mbar evakuiert wird und gleichzeitig in Adsorber B adsorbiert wird, indem Umgebungsluft mit Kompression über das Eintrittsende von Adsorber B geleitet wird und Produktgas über das Auslaßende von Adsorber B in den Produktpuffer geleitet wird und gegebenenfalls gleichzeitig Adsorber A über dessen Austrittsende mit Produktgas gespült wird.

2.  Verfahren zur Trennung von Luft durch Adsorption mit Molekularsieb-Zeolithen in einem Zweibett-Adsorbersystem mit Produktpuffer zur Aufrechterhaltung eines kontinuierlichen, konstanten Sauerstoffproduktstromes gemäß Anspruch 1, dadurch gekennzeichnet, daß

    a) nach der Adsorption in Adsorber A Produktrestgas aus dem Auslaßende des Adsorbers A, dessen Druck dabei von etwa 0,2 bis 0,5 bar Überdruck auf etwa Umgebungsdruck fällt, in den Adsorber B, der sich auf dem niedrigsten Druckniveau von 100 bis 600 mbar befindet, über dessen Auslaßende geleitet wird und gegebenenfalls Adsorber B über das Einlaßende gleichzeitig evakuiert wird, wobei der Druck in Adsorber B bis auf max. 90 % des Umgebungsdruckes ansteigt oder gleichbleibt,

    b) Umgebungsluft ohne zusätzliche Kompression in Adsorber A über dessen Einlaßende eingeleitet wird, $O_2$-reiches Gas am Auslaßende von Adsorber A abgenommen und in Adsorber B über dessen Einlaßende bis auf etwa Umgebungsdruck eingeleitet wird und gegebenenfalls zusätzliche Umgebungsluft ohne zusätzliche Kompression direkt in Adsorber B eingeleitet wird,

    c) Umgebungsluft mit Kompression in Adsorber B über dessen Einlaßende geleitet wird und gegebenenfalls gleichzeitig Produktgas aus dem Produktpuffer in Adsorber B über dessen Auslaßende eingeführt wird und gleichzeitig Absorber A evakuiert wird,

d) Adorber A auf seinen niedrigsten Druck von 100 bis 600 mbar evakuiert wird und gleichzeitig in Adsorber B adsorbiert wird, indem Umgebungsluft mit Kompression über das Eintrittsende von Adsorber B durchgeleitet wird und Produktgas über das Austrittsende von Adsorber B in den Produktpuffer geleitet wird und gegebenenfalls gleichzeitig Adsorber A über dessen Austrittsende mit Produktgas gespült wird.

Fig. 1

**Zeit t1**

**Zeit t2**

——————— Gasströmung

· · · · · · · · keine Gasströmung

EP 0 856 348 A2

Fig. 2a

13

Zeit t3

Zeit t4

Gasströmung

keine Gasströmung

Fig. 2b

EP 0 856 348 A2

Fig. 3

Adsorber A

Adsorber B

Speicher R

P,Ad-max

1 atm

P-Des,o

P-PB, ( P-BFP)

P-Des,min

P-R,m

t1  t2  t3  t4

Fig. 4a

Fig. 4b

Fig. 4c

Fig. 4d

Fig. 5

Fig. 6

Adsorber A

P,Ad-max

1 atm

P-Des,o

P-Des,min

P-PB, ( P-BFP)

Adsorber B

1 atm

Speicher R

1 atm

P-R,m

t1  t2  t3  t4  t5  t6  t7  t8

21